# EUROPEAN PATENT SPECIFICATION

(11) **EP 0 492 450 B1**
(45) Date of publication and mention of the grant of the patent: **28.08.2002**
(21) Application number: 91121817.0
(22) Date of filing: 19.12.1991
(51) Int. Cl.: G06K 19/073

(54) **Memory card having an EEPROM**
Speicherkarte mit EEPROM
Carte mémoire à EEPROM

(30) Priority: 25.12.1990 JP 41297990; 01.03.1991 JP 5774191
(43) Date of publication of application: 01.07.1992
(73) Proprietor: FUJI PHOTO FILM CO., LTD., Kanagawa (JP)
(72) Inventor: Gouhara, Kouichi, c/o Fuji Photo Film Co., Ltd., Minato-ku, Tokyo (JP); Saito, Osamu, c/o Fuji Photo Film Co., Ltd., Minato-ku, Tokyo (JP); Watanabe, Mikio, c/o Fuji Photo Film Co., Ltd., Minato-ku, Tokyo (JP); Okamoto, Satoru, c/o Fuji Photo Film Co., Ltd., Minato-ku, Tokyo (JP)
(74) Representative: Grünecker, Kinkeldey, Stockmair & Schwanhäusser Anwaltssozietät

(56) References cited:
- PATENT ABSTRACTS OF JAPAN vol. 13, no. 12 (P-812)12 January 1989
- PATENT ABSTRACTS OF JAPAN vol. 12, no. 173 (P-706)24 May 1988
- PATENT ABSTRACTS OF JAPAN vol. 14, no. 341 (P-1081)24 July 1990

## Description

The present invention relates to a method of recording data in a memory card according to the preamble part of claim 1 as well as to a memory card system according to the preamble part of claim 4.

### Description of the Prior Art

Today, a memory card using a semiconductor memory is predominant over a floppy disk or disket as means for recording data such as picture data generated by an electronic still camera or character data generated by a word processor, since the former is far smaller in size than the latter. It has been customary with a memory card for such an application to implement the semiconductor memory as an SRAM (Static Random Access Memory) which promotes rapid data reading and writing operations. However, since an SRAM is a volatile semiconductor memory, a memory card with an SRAM needs a back-up battery for preventing data from disappearing. Another problem is that an SRAM capable of storing a great amount of data such as picture data is expensive, increasing the overall cost of a memory card implemented thereby.

In light of the above, a memory card with an EEPROM which is nonvolatile and, therefore, does not need a back-up battery and is inexpensive is now under investigation. An EEPROM is capable of holding data therein for more than ten years without a battery. Some advanced EEPROMs are comparable with an SRAM in respect of the reading and writing rates and are as inexpensive as about one-fourth of an SRAM. However, an EEPROM brings about other problems when it comes to the application to a memory card, as follows. With an EEPROM, it is necessary to give consideration to the processing for the erasure of data due to the nature of the device. Hence, a memory card with an EEPROM has to be provided with extra pins, or the system using such a memory card needs a special implementation. For this reason, a memory card with an EEPROM is not readily compatible with a conventional memory card with an SRAM. Specifically, a memory card with an EEPROM needs extra pins for erasure which are not necessary with a memory card with an SRAM. EEPROMs are generally classified into two types, i, e. , an EEPROM of the type erasing or flushing all the data at a time and an EEPROM of the type erasing a predetermined block of data at a time. The block erasure type EEPROM, like an SRAM, can freely rewrite data block by block, but the flush type EEPROM cannot do so.

With an EEPROM, whether it be of the block erasure type or the flush type, the total number of times that data can be erased and written is limited, e. g. , to 100 times to 10, 000 times. Especially, the service life of an EEPROM is noticeably reduced when repetitive writing concentrates in a particular location thereof.

An EEPROM card for use with an electronic still camera has a storage area storing each frame of picture data in the form of a packet, and packet headers each supervising a plurality of packets collectively. All the packets belonging to a plurality of packet headers are supervised by use of a memory allocation table (MAT). The packet headers each accommodates the packet numbers assigned to the packets which it supervises, the cluster numbers representative of the leading clusters of the individual packets, the number of occupied clusters, the number of idle clusters and other supervisory information, as well as additional information associated with the pictures stored in the packets. The packet headers are each updated every time data is written to any one of the packets belonging thereto. Therefore, when a plurality of picture storage locations to which a particular packet header belongs are evenly used, the packet header reaches the limited number of times of use before the packets associated therewith. Such a packet header is not usable any longer despite that the packets in the picture storage locations have not reached the limited number of times of use.

Patent Abstracts of Japan, Vol. 13, No. 167 (P861) 20-04-89 and JP-A-1003898 (D1) describes a data writing system for an EEPROM. The system comprises a decision circuit, a write circuit, a read circuit, and an EEPROM. Write data is input into the decision circuit. The decision circuit actuates the read circuit to provide the address and the number of rewriting operations of an "active" area (a) of the EEPROM. If the number of rewriting operations does not exceed the maximum number of rewriting operations, the input data is written into the "active" area (a). If the number of rewritings exceeds the maximum number of rewritings, input data is written in a "stand-by" area (b) which has a number of rewriting operations below the maximum number of rewritings. When all "stand-by" areas exceed their maximum number of rewritings, a LED goes one.

Patent Abstracts of Japan, Vol. 13, No. 12 (P812) 12-01-89 and JP-A-63219045 (D2) shows an IC-card with an EEPROM. The EEPROM comprises an operation area and a preparatory area. The preparatory area serves as a substituting storage area for defective addresses in the operation area. A correspondence relation between a defective address and its substituting addresses is held in a defective address map in a PROM. When data stored in the operation area is read out, at first, it is checked if the address is a defective address or not. If it is a defective address, it is substituted by a substituting address in the preparatory area.

It is the object of the present invention to provide a method of storing data in a memory card as well as a memory card system that more efficiently uses the storage areas in a EEPROM.

This object is solved by the subject matter of claims 1 and 4.

Preferred embodiments of the present invention are the subject matter of the dependent claims.

### BRIEF DESCRIPTION OF THE DRAWINGS

The objects and features of the present invention will become more apparent from the consideration of the following detailed description taken in conjunction with the accompanying drawings in which:
FIG. 1 is a block diagram schematically showing a memory card system embodying the present invention;
FIG. 2 shows a supervisory information table included in the embodiment;
FIG. 3 is a block diagram schematically showing a specific construction of a cluster selection control included in the embodiment;
FIG. 4 is block diagram showing an alternative embodiment of the EEPROM card in accordance with the present invention;
FIG. 5 is a memory map representative of a memory cell shown in FIG. 3; and
FIG. 6 shows mode signals appearing in the cluster selection control depicted in FIG. 3.

### DESCRIPTION OF THE PREFERRED EMBODIMENTS

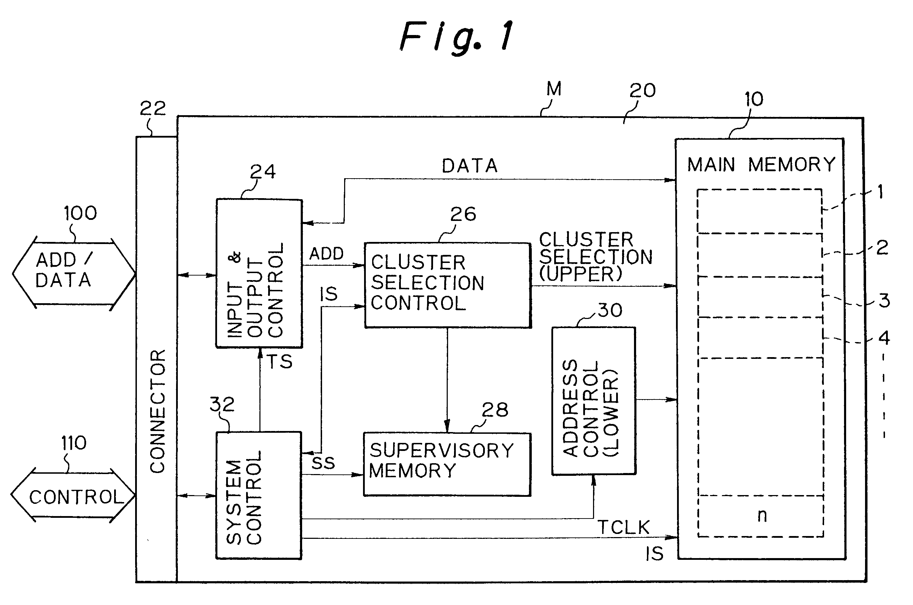

Referring to FIG. 1 of the drawings, a memory card embodying the present invention is shown and generally labeled M. As shown, the memory card M is generally made up of a main memory section 10 for storing data, and a control section 20 for controllably writing and reading data out of the main memory section 10. The memory card M may be connected to an electronic still camera, a playback device associated with such a camera, or similar external apparatus via a connector 22.

The main memory section 10 is implemented as a block erasure type EEPROM having a plurality of memory blocks 1-*n*. The memory blocks 1-*n* each constitutes a single cluster whose capacity is great enough to store, for example, one frame of picture data. Several of the memory blocks or clusters 1-*n* are reserved as idle clusters which store no data therein. Each idle cluster replaces, among the other or active clusters usually used to write data, an active cluster having undergone rewriting a predetermined number of times or having failed to write data correctly. Specifically, assume that the maximum number of times that a cluster can be rewritten, i. e. , the life of a cluster is limited to 1, 000 times. Then, an active cluster having undergone rewriting, for example, fifty times more than a particular idle cluster has the logical address thereof replaced with the logical address of the idle cluster under the control of the control section 20, as will be described.

The control section 20 has an input and output control 24 for controlling the input and output of logical addresses and data. A cluster selection control 26 selects a particular cluster out of the main memory section 10 when data should be written to or read out of the memory section 10. A supervisory memory 28 stores the logical addresses of the clusters 1-*n* and supervisory information associated with the clusters 1-*n* in order to supervise the main memory section 10. An address control 30 controls the lower address of a cluster selected by the cluster selection control 26. A system control 32 controls the various blocks 24-30 included in the control section 20. The input and output control 24 has an address register for receiving a logical address sent from the external apparatus via the connector 22 for writing or reading data and transferring the address to the cluster selection control 26, and a data register for implementing the interchange of data between the external apparatus and the main memory section 10. These registers operate in response to timing signals TS delivered thereto from the system control 32.

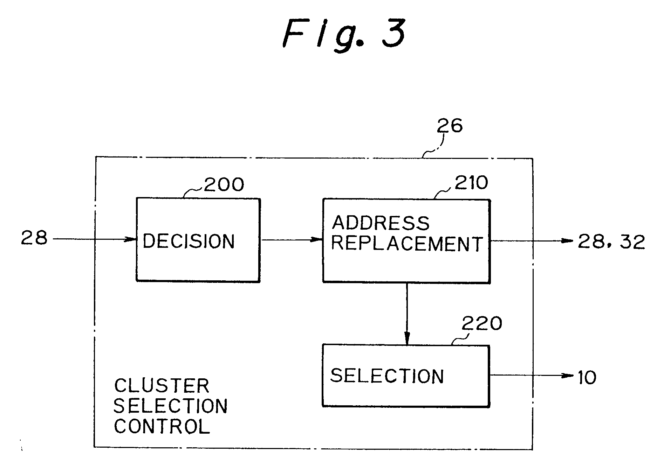

On receiving the logical address from the input and output control 24, the cluster selection control 26 selects one of the clusters 1-*n* designated by the logical address out of the main memory section 10. FIG. 3 shows a specific construction of the cluster selection control 26. As shown, the cluster selection control 26 has a decision 200, an address replacement 210, and a selection 220. Assume that the external apparatus accesses the memory card M for writing data therein. Then, the decision 200 reads the supervisory information of the active cluster designated by the logical address together with the supervisory information of idle clusters out of the supervisory memory 28 and determines whether or not the active cluster has been rewritten a predetermined number of times, e. g. , fifty times more than, among the idle clusters, an idle cluster having undergone rewriting the smallest number of times. When the active cluster of interest has been rewritten such a number of times as determined by the decision 200, the address replacement 210 replaces the logical address of the active cluster and that of the above-mentioned idle cluster with each other and then writes them in the supervisory memory 28. The selection 220 selects the cluster having just been included in the active cluster group by the address replacement 28 as a cluster for which the received logical address is meant. When the cluster selection control 26 has replaced the logical addresses of active cluster and idle cluster, it sends a substitute signal SS to the system control 32.

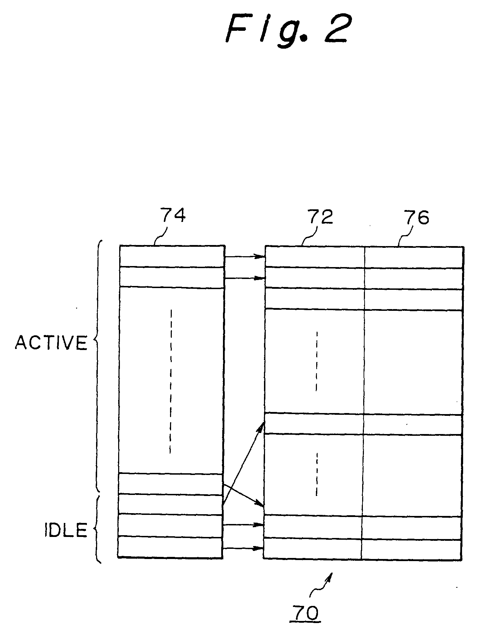

The supervisory memory 28 is constituted by a nonvolatile memory such as a nonvoltile RAM and, therefore, holds the contents thereof even when the memory card M is removed from the external apparatus. The supervisory memory 28 stores supervisory information in the form of, for example, a supervisory information table 70 shown in FIG. 2. The supervisory information table 70 stores the supervisory information of the active clusters and idle clusters of the main memory section 10 by matching the physical addresses 72 of the clusters to the logical addresses 74. More specifically, each logical address 72 is replaceable with any one of the physical addresses 72, and supervisory information 76 are associated with the individual physical addresses 72. The cluster-by-cluster supervisory information 76 include a data storage condition indicative of whether a cluster is idle or not on a byte basis, the number of time that an access has been made to a cluster, whether or not a cluster is waiting for an access, the number of times that a cluster has been used, and whether or not data has been successfully written to a cluster.

The address control 30 is implemented by an address counter. By counting a timing clock being sent from the system control 32, the address control 30 delivers to the main memory 10 the lower address for writing or reading data byte by byte in or out of the cluster having been selected by the selection 220 of the cluster selection control 26.

A write signal for writing data or a read signal for reading data is sent from the external apparatus to the system control 32 via the connector 22. In response, the system control 32 delivers control signals matching the read signal or the write signal to the above-stated functional blocks 24-30 of the memory control section 20. Specifically, on receiving a control signal, i. e. , a read signal or a write signal, the system control 32 feeds an identification signal IS representative of a read mode or a write mode to the memory section 10 and cluster selection control 26, while sending a BUSY signal to the external apparatus to show it that processing is under way. The system control 32 delivers a timing signal TS for writing or reading to the input and output control 24. The input and output control 24 sends a timing clock TCLK to the address control 30 and main memory section 10 in synchronism with the timing signal TS.

Another function of the system control 32 is to delete data stored in an active cluster when the data should be rewritten. When data stored in a given active cluster should be rewritten, the system control 32 sends a delete signal to the main memory 10 before writing data in the active cluster. On the other hand, when an idle cluster is substituted for an active cluster, the system control 32 causes, after data has been written to an idle cluster having turned out an active cluster, the cluster selection control 26 to select the cluster having turned out an idle cluster and then sends a delete signal for deleting the content of such a cluster.

The connector 22 for connecting the control section 20 to the external apparatus has terminals connectable to an address/data bus 100 over which addresses and data are sent and a control bus 110 over which controls signals are sent. The address/data bus 100 sends a write address or a read address and data that follows the address to the memory card M, while sending data read out of the memory card M to the external apparatus. The control bus 110 sends a write signal or a read signal to the memory card M while sending the BUSY signal generated by the system control 32 to the apparatus.

The operation of the memory card M having the above construction and a method of recording data therein will be described hereinafter. The operator mounts the memory card M on an external apparatus by connecting the connector 22 to the address/data bus 100 and control bus 110 of the apparatus. Assume that the apparatus is an electronic still camera or similar apparatus which records data in the memory card M. As the apparatus sends a write signal to the memory card M over the control bus 110, the system control 32 determines whether the received signal is a write signal or whether it is a read signal. If the signal is a read signal, the system control 32 delivers a timing signal TS for reading an address to the input and output control 24 and, at the same time, delivers an identification signal IS indicative of a write mode to the cluster selection control 26.

When the input and output control 24 receives a write address from the apparatus, it writes the write address in the address register in response to the timing signal TS, while transferring the address to the cluster selection control 26. On receiving the write address, the cluster selection control 26 reads the supervisory information 76 of an active cluster designated by the logical address as well as the supervisory information 76 of idle clusters out of the supervisory memory 28. Then, the cluster selection control 26 compares the number of times that the active clusters of interest has been rewritten with one of the idle clusters having been rewritten the smallest number of times, thereby determining whether or not the active cluster should be replaced with the idle cluster. If the active cluster has been rewritten a predetermined number of times, e. g. , fifty times more than the idle cluster, the control 26 replaces the logical addresses of the idle cluster and active cluster, writes the replaced addresses in the supervisory memory 28, and then accesses the cluster having turned out an active cluster. Further, the control 26 sends a substitute signal SS to the system control 32. In response, the system control 32 stops sending the BUSY signal to the apparatus.

Subsequently, the apparatus sends data to be written to the memory card M. The input and output control 24 writes the data in the data register thereof and transfers it to the main memory 10 in synchronism with the timing signal TS from the system control 32. At this instant, the system control 32 feeds a timing clock TCLK for writing the data to the address control 30 and main memory section 10. As a result, the main memory section 10 sequentially writes the data being transferred from the input and output control 24 in the cluster having been selected by the cluster selection control 26, byte by byte in response to an address signal from the address control 30. When the received data is fully written to the cluster of interest, the cluster selection control 26 updates the number of times of rewriting stored in the corresponding address of the supervisory memory 30. Thereafter, the system control 32 causes the cluster selection control 26 to select the cluster now included in the idle clusters out of the supervisory memory 28 and delivers a delete signal to the main memory 10 for deleting the data of the cluster. Consequently, the cluster having turned out an idle cluster is reserved for future substitution.

An active cluster and an idle cluster are replaced with each other by the above-described procedure. When the designated active cluster has not reached the limited number of times of rewriting as determined by the cluster selection control 28, the data stored in the cluster is deleted by a delete signal fed from the system control 32, and then the data sent from the external apparatus is written to the same cluster. However, if the supervisory information 76 stored in the supervisory memory 28 indicates that the data stored in the designated active cluster is in a defective storage condition, such a cluster is replaced with an idle cluster even when it has not reached the maximum number of times of rewriting.

As stated above, in the illustrative embodiment, several idle clusters are formed in the main memory section 10. When an active cluster designated to write data therein has undergone rewriting a predetermined number of times, e. g. , fifty times more than, among the idle clusters, an idle cluster having undergone rewriting the smallest number of times or when the active cluster is in a defective storage condition, it is replaced with the idle cluster of interest. Hence, even when data rewriting concentrates on a particular address, it is prevented from concentrating on a particular cluster since an idle cluster is substituted for an active cluster by the replacement of their logical addresses. It is possible, therefore, to make full use of the life of the memory card M using an EEPROM which cannot be rewritten more than a predetermined number of times, since the clusters of the memory card M are evenly used.

While the memory card M has been shown and described as incorporating both the control section 20 and the main memory section 10 therein, the control section 20 may be incorporated in an external apparatus or implemented as an adapter which is independent of the memory card M. In the illustrative embodiment, data stored in the active cluster having been replaced by the idle cluster is deleted after data has been written to the substitute active cluster. Alternatively, the deletion may be effected before the data is written to the substitute active cluster.

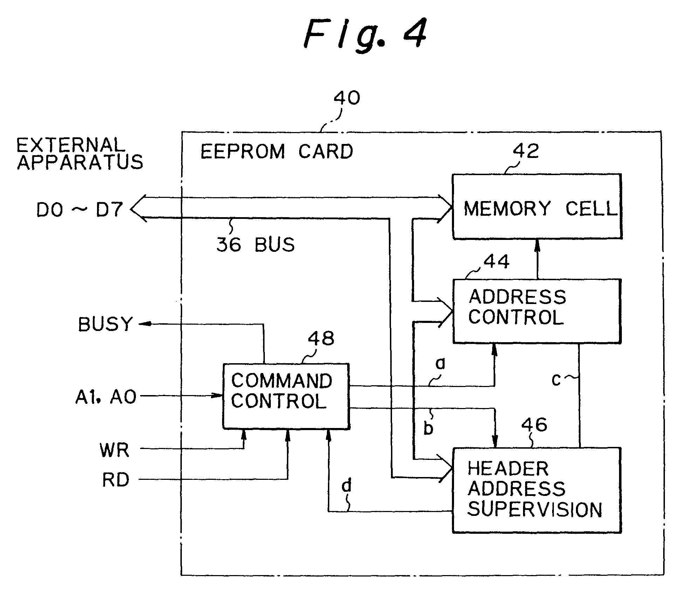

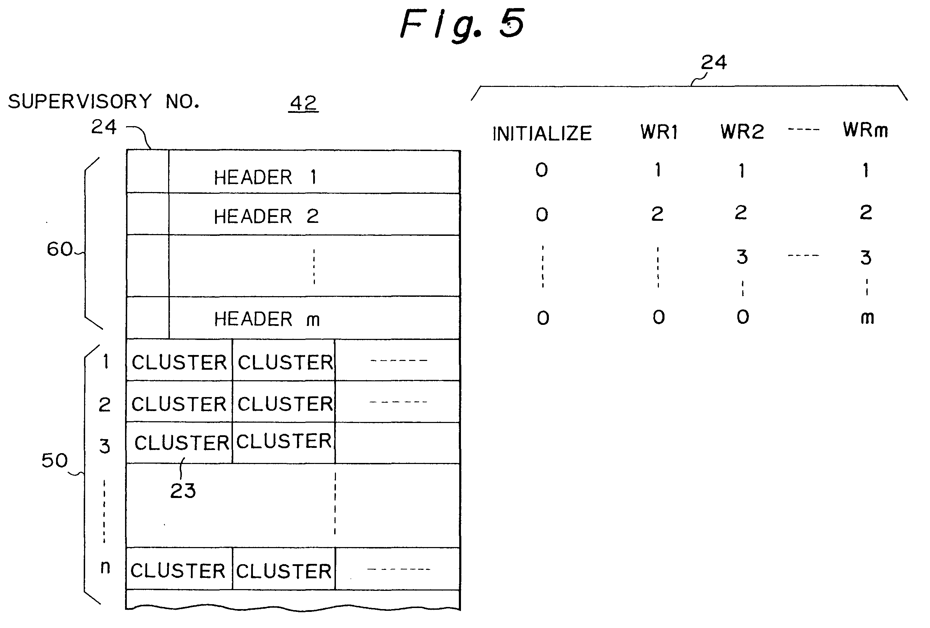

Referring to FIGS. 4-6, an alternative embodiment of the present invention will be described. This embodiment is different from the previous embodiment in that a great amount of data such as data representative of a high resolution picture are written over a few clusters, and in that a plurality of packet headers for supervising packets each being constituted by such clusters are formed in the storage area of an EEPROM. As shown in FIG. 4, the memory card, generally 40, is made up of a memory cell 42, an address control 44, a header address supervision 46, and a command control 48. The memory cell 42 is implemented by a block erasure type EEPROM. As shown in FIG. 5, the memory cell 42 has a data storage area 50 constituted by a plurality of clusters 23 for storing picture data, and a header portion 60 for storing supervisory information associated with the clusters 23. The data storage area 50 is supervised on a cluster basis. A few clusters over which data representative of one picture is written constitute a single packet, and a plurality of packets 1-*n* are formed in the data storage area 50. The header portion 60 has packet headers 1-*m* which can be deleted on a block basis. The packet headers 1-*m* each stores packet supervisory information including the number assigned to the associated the packets 1-*n*, the number assigned to the leading cluster of the associated packet, the number of clusters used, and the number of remaining clusters, together with user information relating to the picture recorded in the packet. It is a common practice with a conventional system to rewrite a single header every time data is written to a packet or every time a packet is rewritten. In such a case, the life of the EEPROM undesirably depends on the life of the packet header. To avoid this, the illustrative embodiment forms a plurality of packet headers 1-*m* in the memory cell 10 and sequentilly replaces the packet headers 1-*m* every time data is written to a packet or every time a packet is rewritten. Each of the packet headers 1-*m* is provided with a particular header supervisory number 24.

In operation, the supervisory numbers 24 assigned to the packet headers 1-*m* are initially set to "0". In response to a write request WR1, one of the packet headers corresponding to the greatest supervisory number 24 is read out. Since all the supervisory numbers 24 are "0" at this stage of operation, any one of the headers, e. g. , the header 1 is selected while picture data is written to any one of the packets 1-*n*. Then, the supervisory number of the header 1 is changed from "0" to "1". When data should be written to another packet, the smallest supervisory number "0" is changed to the greatest supervisory number plus "1", i. e. , "2" in this case. Specifically, since *m* - 1 packet headers have the smallest supervisory number "0", the supervisory number of, for example, the packet header 2 is changed to "2", and then the content of the packet header 1 is changed and written to the header 2. When the next write request WR2 occurs, the packet header 2 corresponding to the existing greatest supervisory number "2" is read out, and data is written to any one of the idle packets, e. g. , the packet 5. Subsequently, the supervisory number of one of the packet headers having the smallest supervisory number "0", e. g. , the header 3 is changed to the sum of the greatest supervisory number "2" and "1", i. e. , "3". After the data has been written to te packet 5, the content of the header 2 is changed and written to the header 3 having the greatest supervisory number "3". As data is written to the data storage area 50 *m* consecutive times (WR1-WR*m*), the packet headers 1-*m* are used once since the supervisory number 24 is updated each time. Hence, the number of times that each packet header is used is as small as 1/*m* of the conventional packet header, preventing the life of the memory cell or EEPROM 42 from being shortened.

In the above embodiment, the *m* packets are used. once each. Even when the same packet is rewritten a plurality of times, a packet header (1-*n*) having the greatest supervisory number 24 is selected every time the packet is rewritten. If desired, the supervisory numbers 24 may be implemented as relative numbers or cyclic numbers in order to use them sequentially in order of number.

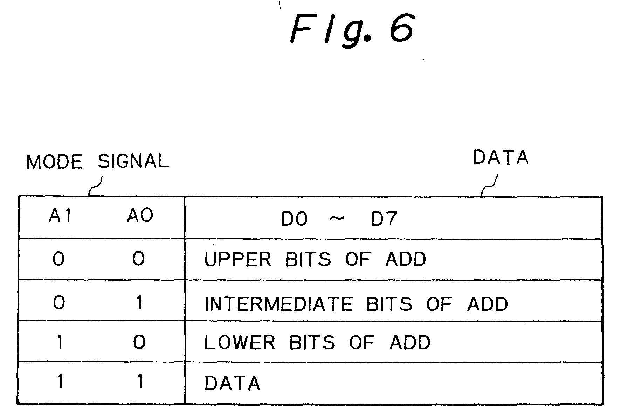

As shown in FIG. 4, the memory cell 42, address control 44 and header address supervision 46 are connected to a system controller, not shown, included in an electronic still camera or similar external apparatus by a data bus 36. The external apparatus sends data to be written to the memory cell 42 and an address over the bus 36 in the form of signals D0-D7. FIG. 6 shows binary mode signals which the system of the apparatus sends to the command control 48 of the memory card 40. The command control 48 determines the content of the signals D0-D7, i. e. , the start address of upper bits, intermediate bits or lower bits of an address or data on the basis of the binary mode signals A0 and A1 which are one of "00" to "11". When the signals D0-D7 are representative of an address, the command control 48 feeds a start address to the address control 44 over a signal line *a*, and the address control 44 latchs the start address. As the system of the apparatus sends a write signal WR or a read signal RD to the command control 48, the control 48 sends a BUSY signal to the system during the access period to the memory cell 42. The command control 48 delivers a trigger signal *b* to the header address supervision 46. In response, the header address supervision 46 feeds a number *c* for searching the supervisory numbers 24 to the address control 44. The address control 44 latches the start address from the command control 48 in a register, not shown, and adds to the start address the address sent from the apparatus over the bus 36 or the number *c* fed from the header address supervision 46. The resulting sum, or address, is fed to the memory cell 42 to access the supervisory numbers 24, headers 60, and data storage area 50.

Before writing picture data, the system sends a read signal (RD) and mode signals A0 and A1 for reading header data to the command control 48 while sending the address D0-D7 of one of the headers 1-*m* over the bus 36. In response, the command control 48 sends a BUSY signal to the system and delivers an initial address corresponding to the binary values of the mode signals A0 and A1 to the address control 44 over the signal line *a*. The address control 44 latches the initial address in a counter thereof, not shown, adds the address C0-D7 of one of the headers 1-*m* sent over the bus 36 to the content of the counter, and then reads out the corresponding header (1-*m*) on the bus 36.

The command control 48 feeds a trigger signal *b* to the header address supervision 46. The header address supervision 46, in turn, feeds a number *c* for accessing the supervisory numbers 24 of the headers 1-*m* to the address control 44. The address control 44 adds the number *c* to the address counter and then causes *m* supervisory numbers to be read out of the memory cell 42 and fed to the bus 36 on the basis of the resulting address. The header address supervision 46 receives the *m* supervisory numbers and memorizes the greatest and smallest supevisory numbers. The header address supervision 46 again sends a number *c'* corresponding to the greatest supervisory number 24 to the address control 44. In response, the address control 44 causes the data D0-D7 of the header (1-*m*) having the greatest supervisory number 34 to be read out of the memory cell 42 and fed to the bus 36. That is, data is read out by the read signal RD. The header address supervision 46 sends an end signal to the command control 48, causing it to stop sending the BUSY signal to the apparatus. The system selects, among the packets 1-*n*, idle packets on the basis of the data representative of the header having the greatest supervisory number 24 and then sends a write signal WR, mode signals A0 and A1 and signals D0-D7 to the memory card 40. The memory card 40 determines whether the signals D0-D7 on the bus 36 are an address or whether they are data by referencing the mode signals A0 and A1 and, if they are data, writes them in the idle packets.

On completing the data writing operation, the memory card 40 updates the content of the header read out. Then, the memory card 40 adds "1" to the greatest supervisory number 24, writes the sum in the location of supervisory number 24 having the smallest supervisory number as a new supervisory number, and then substitutes the above-mentioned updated data for the data of the header with the new supervisory number. At this instant, the memory card 40 writes the number of times of rewriting in the header. Therefore, when the header reaches the limited number of times of rewriting, the system of the apparatus may produce an alarm to inform the user of the fact that the system stops writing data in the memory card 40, thereby eliminating defective recording.

As described above, the illustrative embodiment reduces the number of times that each header of the memory card 40 is rewritten to 1/*m* of conventional frequency. This is successful in extending the life of the memory card 40 and preventing data from being rewritten more than a limited number of times.

## Claims

1. A method of recording data in a memory card having an EEPROM as a main memory, the method comprising the steps of
(a) reserving part of a plurality of memory blocks (1-n) constituting said EEPROM (10) as idle blocks which store no data therein, the other memory blocks being active blocks each storing data therein;
(b) determining, when an access of the kind needing rewriting is made to one of said active blocks, how many times said one active block has undergone rewriting;
(c) replacing said active block by an idle block, when said one active block has undergone rewriting a first number of times;
(d) writing said data in said one idle block having been included in said active blocks, **characterized by**
step (b) comprising determining the number of times said idle block has undergone rewriting and comparing it with the first number of times;
carry out said step (c)
- only if said first number of times is a predetermined number of times greater than the number of times of rewriting of said particular idle block and
- by replacing the logical address of said one active block and the logical address of a particular one of said idle blocks, to thereby include said one idle block in said active blocks, while deleting data stored in said one active block and then including said one active block in said idle blocks.

2. Method in accordance with claim 1, **characterized in that** said idle block to replace said active block is an idle block having undergone rewriting the smallest number of times.

3. Method in accordance with claim 1 or 2, **characterized in that** in case that said first number of times is not said predetermined number of times greater than the number of times of rewriting said particular idle block,
testing whether said active block is defective and replacing said active block by said idle block if said active block is defective.

4. A memory card system comprising:
a memory card which incorporates an EEPROM as a main memory section thereof, said EEPROM comprising a plurality of memory blocks (1-n) a part of which being reserved as idle blocks which store no data therein,
while the other memory blocks being active blocks for storing data therein;
a supervisory memory section (28) for storing information representative of the number of times data rewriting to the blocks of the EEPROM has occurred;
a block selecting section (26) for receiving a logical address sent from an external apparatus connected to said memory card by which address one of said active blocks is selected,
a system control section (32) for controlling said main memory section (10), said supervisory memory section (28) and said block selecting section (26) in response to a control signal sent from said external apparatus, said block selecting section (26) comprising deciding means (200) for reading supervisory information about said active blocks and said idle blocks out of said supervisory memory section and for determining whether or not said address active block has undergone rewriting a first number of times, the system being
**characterized by**
address replacing means (210) for replacing the logical address of said active block and the logical address of a particular one of said idle blocks stored in said supervisory memory section (28) with each other and writing said replaced logical addresses in said supervisory memory (28) when the first number of times is a predetermined number of times greater than the number of times of rewriting of the idle block;
selecting means (220) for selecting said one idle block having been included in said active blocks by said address replacing means as the memory block which is addressed by said logical address received from said external apparatus; and
whereby said system control section (32) deletes the data stored in said active block when the active block is replaced by said idle block.

5. System in accordance with claim 4, **characterized in that**
said EEPROM has a storage area in which a plurality of headers storing supervisory information associated with a data storage area formed, a supervisory number being assigned to each of said plurality of headers for identifying the associated header when data should be written to said data storage area; and
said system further comprising header supervising means (46) for causing said plurality of headers to be used in sequence on the basis of said supervisory numbers.

## Patentansprüche

1. Verfahren zum Aufzeichnen von Daten in einer Speicherkarte mit einem EEPROM als Hauptspeicher, wobei das Verfahren die Schritte umfaßt:
(a) Reservieren eines Teils einer Vielzahl von Speicherblöcken (1-n), welches das EEPROM (10) bilden, als leere Blöcke, welche darin keine Daten speichern, während die anderen Speicherblöcke aktive Blöcke sind, welche Daten darin speichern;
(b) Ermitteln, wenn ein Zugriff der Art, welcher eine Wiederbeschreibung erfordert, auf einen der aktiven Blöcke erfolgt, wie viele Male dieser eine aktive Block bereits einer Wiederbeschreibung unterzogen worden ist;
(c) Ersetzen des aktiven Blockes durch einen freien Block, wenn der eine aktive Block einer ersten Anzahl von Malen einer Wiederbeschreibung unterzogen worden ist;
(d) Schreiben der Daten in den einen leeren Block, welcher in die aktiven Blöcke eingefügt worden ist,
**dadurch gekennzeichnet, daß**:
der Schritt (b) das Ermitteln der Anzahl von Malen, mit denen der freie Block einer Wiederbeschreibung unterworfen wurde und das Vergleichen dieser, mit der ersten Anzahl von Malen umfaßt;
der Schritt (c) ausgeführt wird:
- nur wenn die erste Anzahl von Malen eine vorbestimmte Anzahl von Malen größer als die Anzahl von Malen der Wiederbeschreibung des speziellen leeren Blockes ist, und
- indem die logische Adresse von dem einen aktiven Block und die logische Adresse von einem speziellen von den leeren Blöcken ersetzt werden, um dadurch den einen leeren Block in die aktiven Blöcke einzubeziehen, wobei in dem aktiven Block gespeicherte Daten gelöscht werden, und dann der eine aktive Block in die leeren Blöcke einbezogen wird.

2. Verfahren nach Anspruch 1, **dadurch gekennzeichnet, daß**, der leere Block zum Ersetzen des aktiven Blockes ein leerer Block ist, welcher der kleinsten Anzahl von Malen einer Wiederbeschreibung unterzogen wurde.

3. Verfahren nach Anspruch 1 oder 2, **dadurch gekennzeichnet, daß** in einem Falle, in dem die erste Anzahl von Malen nicht die vorbestimmte Anzahl von Malen größer als die Anzahl von Malen einer Wiederbeschreibung des speziellen leeren Blockes ist,
getestet wird, ob der aktive Block defekt ist, und der aktive Block durch den leeren Block ersetzt wird, wenn der aktive Block defekt ist.

4. Speicherkartensystem, welches umfaßt:
eine Speicherkarte, welche ein EEPROM als Hauptspeicherabschnitt enthält, wobei das EEPROM eine Vielzahl von Speicherblöcken (1-n) umfaßt, wovon ein Teil als leere Blöcke reserviert ist, welche darin keine Daten speichern,
während die anderen Speicherblöcke aktive Blöcke zum Speichern von Daten darin sind;
einen Überwachungsspeicherabschnitt (28) zum Speichern von information, welche die Anzahl von Malen repräsentiert, mit der eine Datenüberschreibung der Blöcke des EEPROMs aufgetreten ist;
einen Blockauswahlabschnitt (26) zum Empfangen einer von einer externen Vorrichtung gesendeten logischen Adresse, mittels der einer von den aktiven Blöcken ausgewählt wird,
einen Systemsteuerabschnitt (32) zum Steuern des Hauptspeicherabschnittes (10), wobei der Überwachungsspeicherabschnitt (28) und der Blockauswahlabschnitt (26) als Antwort auf ein von einer externen Vorrichtung gesendetes Steuersignal arbeiten, wobei der Blockauswahlabschnitt (26) eine Entscheidungseinrichtung (200) umfaßt, um Überwachungsinformation über die aktiven Blöcke und die leeren Blöcke aus dem Überwachungsspeicherabschnitt auszulesen und um zu ermitteln, ob die adressierten aktiven Blöcke einer Wiederbeschreibung eine erste Anzahl von Malen unterzogen worden sind, wobei das System
**gekennzeichnet ist, durch**:
eine Adressenersetzungseinrichtung (210) zum Ersetzen der logischen Adresse des aktiven Blockes und der logischen Adresse eines speziellen von den in dem Überwachungsspeicherabschnitt (28) gespeicherten leeren Blöcken **durch** einen andere und Schreiben der ersetzten logischen Adressen in dem Überwachungsspeicher (28), wenn die erste Anzahl von Malen größer als eine vorbestimmte Anzahl von Malen einer Wiederbeschreibung des leeren Blockes ist;
eine Auswahleinrichtung (220) zum Auswählen des einen leeren Blockes, der **durch** die Adressenersetzungseinrichtung in die aktiven Blöcke als der Speicherblock einbezogen wurde, welcher von der von der externen Vorrichtung empfangen logischen Adresse adressiert wird; und
wodurch der Systemsteuerabschnitt (32) die in dem aktiven Block gespeicherten Daten löscht, wenn der aktive Block **durch** den leeren Block ersetzt wird.

5. System nach Anspruch 4, **dadurch gekennzeichnet, daß**:
das EEPROM einen Speicherbereich aufweist, in welchem eine Vielzahl von Vorspannen eine Überwachungsinformation speichert, die einem erzeugten Datenspeicherbereich zugeordnet ist, wobei eine Überwachungsnummer jedem von einer Vielzahl von Vorspannen zum Identifizieren des zugeordneten Vorspanns zugeordnet wird, wenn Daten in dem Datenspeicherbereich gespeichert werden sollen; und
das System ferner eine Vorspannüberwachungseinrichtung (46) umfaßt, um zu bewirken, daß die Vielzahl von Vorspannen in einer Ablauffolge auf der Basis der Überwachungsnummern verwendet werden.

## Revendications

1. Procédé d'enregistrement de données dans une carte de mémoire comportant une EEPROM (mémoire morte programmable et effaçable électriquement) comme mémoire principale, le procédé comprenant les étapes consistant :
(a) à réserver une partie d'une pluralité de blocs (1 à n) de mémoire constituant ladite EEPROM (10) en tant que blocs libres qui ne mémorisent pas de données, les autres blocs de mémoire étant des blocs actifs chacun mémorisant des données ;
(b) à déterminer, lorsque l'on fait un accès du type nécessitant une réécriture à l'un desdits blocs actifs, combien de fois ledit bloc actif a fait l'objet de réécriture ;
(c) à remplacer ledit bloc actif par un bloc libre, lorsque ledit un bloc actif a fait l'objet de réécriture un premier nombre de fois ;
(d) à écrire lesdites données dans ledit un bloc libre qui a été inclus dans lesdits blocs actifs, **caractérisé :**
**en ce que** l'étape (b) comprend la détermination du nombre de fois où ledit bloc libre a fait l'objet de réécriture et sa comparaison avec le premier nombre de fois ;
par l'exécution de ladite étape (c),
seulement si ledit premier nombre de fois est un nombre prédéterminé de fois plus grand que le nombre de fois de réécriture dudit bloc libre particulier ; et
en remplaçant l'adresse logique dudit bloc actif et l'adresse logique de l'un, particulier, desdits blocs libres, pour inclure ainsi ledit bloc libre dans lesdits blocs actifs, tout en effaçant les données mémorisées dans ledit bloc actif et en incluant alors ledit bloc actif dans lesdits blocs libres.

2. Procédé selon la revendication 1, **caractérisé en ce que** ledit bloc libre destiné à remplacer ledit bloc actif est un bloc libre ayant fait l'objet de réécriture le plus petit nombre de fois.

3. Procédé selon la revendication 1 ou 2, **caractérisé en ce que**, dans le cas où ledit premier nombre de fois n'est pas ledit nombre de fois prédéterminé plus grand que le nombre de fois de réécriture dudit bloc libre particulier,
on teste si ledit bloc actif est défectueux et l'on remplace ledit bloc actif par ledit bloc libre si ledit bloc actif est défectueux.

4. Système de carte de mémoire comprenant :
une carte de mémoire qui incorpore une EEPROM en tant que sa section de mémoire principale, ladite EEPROM comprenant une pluralité de blocs (1 à n) de mémoire dont une partie est réservée en tant que blocs libres qui ne mémorisent pas de données ;
tandis que les autres blocs de mémoire sont des blocs actifs pour mémoriser des données ;
une section (28) de mémoire de surveillance destinée à mémoriser de l'information représentative du nombre de fois où une réécriture de données s'est produite dans les blocs de l'EEPROM ;
une section (26) de choix de blocs destinée à recevoir une adresse logique envoyée depuis un dispositif externe connecté à ladite carte de mémoire par laquelle adresse l'un desdits blocs actifs est choisi ;
une section (32) de commande de système destinée à commander ladite section (10) de mémoire principale, ladite section (28) de mémoire de surveillance et ladite section (26) de choix de bloc en réponse à un signal de commande envoyé dudit dispositif externe, ladite section (26) de choix de bloc comprenant un moyen (200) de décision destiné à lire l'information de surveillance au sujet desdits blocs actifs et desdits blocs libres dans ladite section de mémoire de surveillance et à déterminer si ledit bloc actif adressé a, ou non, fait l'objet de réécriture un premier nombre de fois, le système étant
**caractérisé :**
**par** un moyen (210) de remplacement d'adresse destiné à remplacer, l'une par l'autre, l'adresse logique dudit bloc actif et l'adresse logique de l'un, particulier, desdits blocs libres mémorisée dans ladite section (28) de mémoire de surveillance, et à écrire lesdites adresses logiques remplacées dans ladite mémoire (28) de surveillance lorsque le premier nombre de fois est un nombre de fois prédéterminé plus grand que le nombre de fois de réécriture du bloc libre ;
par un moyen (220) de choix destiné à choisir ledit bloc libre qui a été inclus dans lesdits blocs actifs par ledit moyen de remplacement d'adresse comme bloc de mémoire qui est adressé par ladite adresse logique reçue dudit dispositif externe ; et
en ce que ladite section (32) de commande de système efface ainsi les données mémorisées dans ledit bloc actif lorsque ledit bloc actif est remplacé par ledit bloc libre.

5. Système selon la revendication 4, **caractérisé :**
**en ce que** ladite EEPROM possède une zone de mémorisation dans laquelle est formée une pluralité d'en-têtes mémorisant de l'information de surveillance associée à une zone de mémorisation de données, un numéro de surveillance étant affecté à chacun de ladite pluralité d'en-têtes pour identifier l'en-tête associé lorsque les données doivent être écrites dans ladite zone de mémorisation de données ; et
**en ce que** le système comprend en outre un moyen (46) de surveillance d'en-têtes destiné à faire que ladite pluralité d'en-têtes soit utilisée en séquence sur la base desdits numéros de surveillance.
